# EUROPEAN PATENT APPLICATION

(11) **EP 2 682 254 A1**
(43) Date of publication of application: **08.01.2014**
(21) Application number: 12175373.5
(22) Date of filing: 06.07.2012
(51) Int. Cl.: B29C 65/18, B29C 65/20, B65B 9/04, B65B 25/00, B65B 47/02, B29C 65/00

(54) **Method for wrapping a lollipop head between two films**

(71) Applicant: GEA CFS Weert B.V., 6006 RV Weert (NL)
(72) Inventor: Baumeister, Bruno Gerfried, 52078 Aachen (DE); Segers, Davy, 6031 VP Nederweert (NL)
(74) Representative: Wolff, Felix

(57) **Abstract**

The present invention relates to a method for wrapping a lollipop head (13.1) between two films (11,12), which are connected by a seal (14) which extends around the circumference of the lollipop head (13.1). The present invention further relates to a sealing unit (1) to seal two films (11,12) at the circumference of a lollipop head with two sealing rolls (2,3).

## Description

The present invention relates to a method for wrapping a lollipop head between two films, which are connected by a seal which extends around the circumference of the lollipop head. The present invention further relates to a sealing unit to seal two films at the circumference of a lollipop head with two sealing rolls.

This method is well known. A lollipop head is placed between two films which are subsequently sealed together around the circumference of the head of the lollipop. This method has mainly been utilized for flat lollipop heads. However, nowadays, lollipops heads have a more complex, three dimensional shape, for example the shape of a sphere, which is more difficult to package with the above mentioned method. The films often crack and/or the resulting package is too wrinkled.

It was therefore the objective of the present invention to provide a method for wrapping a lollipop head between two films, which are connected by a seal which extends around the circumference of the lollipop head, which can be utilized for complexly shaped lollipop heads.

The problem is solved with a method for wrapping a lollipop head between two films, which are connected by a seal which extends essentially around the circumference of the lollipop head, wherein at least one film is heated, prior to sealing.

The disclosure made regarding this embodiment of the present invention also applies to the other embodiments of the present invention and vice versa.

During the packaging process, the head of each lollipop is sandwiched between two films, which are sealed together around the circumference of the head of the lollipop. The sealing of the two films is carried out at an increased temperature and/or under pressure. Preferably both films and the lollipop move during the sealing continuously at the same speed or semi-continuously.

Due to the heating of the film, prior to the sealing of the two films, the heated film becomes more flexible and does not crack so easily. Furthermore, wrinkling of the film is avoided. The heating can be carried out by heat transfer based on conduction, convection and/or radiation.

Preferably, the surface of the film is heated. More preferably the entire surface of the film is heated. Preferably, the film is heated, while it moves past a heating means, which heats the film over its entire width, i.e. over its entire extension perpendicular to the direction of motion. Preferably, the film is heated by contact or non-contact-heating by the heating means. Preferably, during sealing, the film has a uniform temperature at least over its width. The heating means is for example a heated surface, which is in touch with the film. In this case, the heat transfer takes place by conduction. The film touches the surface over its entire width. The surface is preferably heated to a uniform temperature.

Preferably, at least one, preferably both films are deformed elastically or plastically during the wrapping and/or sealing.

In a preferred embodiment, both films are heated. Preferably, each film is heated to its plasticizing-temperature, so that it is plastically formed during the wrapping/sealing. This results in a package of the lollipop head which is tighter around the lollipop head and has less wrinkles.

Preferably, the film is heated at its outer surface, i.e. the surface that faces away from the lollipop head. In another preferred embodiment, the film is heated at its inner surface, i.e. the surface that is in touch with the lollipop head. This is for example preferred in case the film has a print, so that the print is not in touch with the heating means.

Another embodiment of the present invention is a sealing unit which seals two film together around the circumference of a lollipop head, which comprises two heating means to preheat the surface of a least one, preferably both film(s) upstream from the sealing rolls.

The disclosure made regarding this embodiment of the present invention also applies to the other embodiments of the present invention and vice versa.

The sealing rolls are heated and preferably press the two films together, so that the two films are sealed together under the influence of an increased temperature and/or pressure. Each sealing roll comprises a multitude of cavities at its outer circumference, which take up the lollipop head during sealing of the two films. Around this cavity, preferably the sealing areal extends in which the two films are sealed together.

Preferably, one heating means is provided for each film. Preferably, the heating means is a heated surface. The film moves past this heated surface and is preferably in contact with the heated surface.

In a preferred embodiment, the heating means comprise a low heat capacity, so that their temperature can be adjusted in a short time interval. In case the transportation of the film stops, the preheating means are preferably turned off and/or the film is moved away from the heating means, so that there is no or only little contact between the film and the preheating means. This assures that the film is not damaged by the heating means.

Preferably, the heating means are located directly upstream from the sealing rolls, so that the film does not cool down prior to the sealing.

Preferably, the width of the heating means is at least equal to the width of the film, to assure that the film is heated over its entire width.

According to another preferred or inventive embodiment of the present invention, each sealing roll comprises a multitude of cavities at its outer circumference, which each take up the lollipop head during sealing of the two films, whereas each cavity comprises a ventilation opening. Through this opening, which is preferably a bore, entrapped air can escape, when the lollipop enters the cavity. This also improves the quality of the wrapping. Additionally or alternatively, air can be sucked in, during removal of the packaged lollipop.

The disclosure made regarding this embodiment of the present invention also applies to the other embodiments of the present invention and vice versa.

According to another preferred or inventive embodiment of the present invention, each sealing roll comprises a heating surface and a bearing, wherein a heat insulation is provided between the heating surface and the bearing.

The disclosure made regarding this embodiment of the present invention also applies to the other embodiments of the present invention and vice versa.

Due to the insulation, particularly the lifetime of the bearing is significantly improved.

Preferably, the heat insulation is a cylindrical layer of a material with a low thermal conductivity, particularly a thermal conductivity that is significantly lower than the thermal conductivity of steel, particularly stainless steel. Preferably, the insulation layer is made from a plastic material.

The inventions are now explained according to figures 1 - 4. The explanations apply to all embodiments of the present invention likewise. The explanations do not limit the scope of protection of the present invention.
Figures 1 a and b show a sealing unit.
Figures 2 and 3 show a first embodiment of the present invention.
Figure 4 shows an embodiment of the inventive sealing unit.

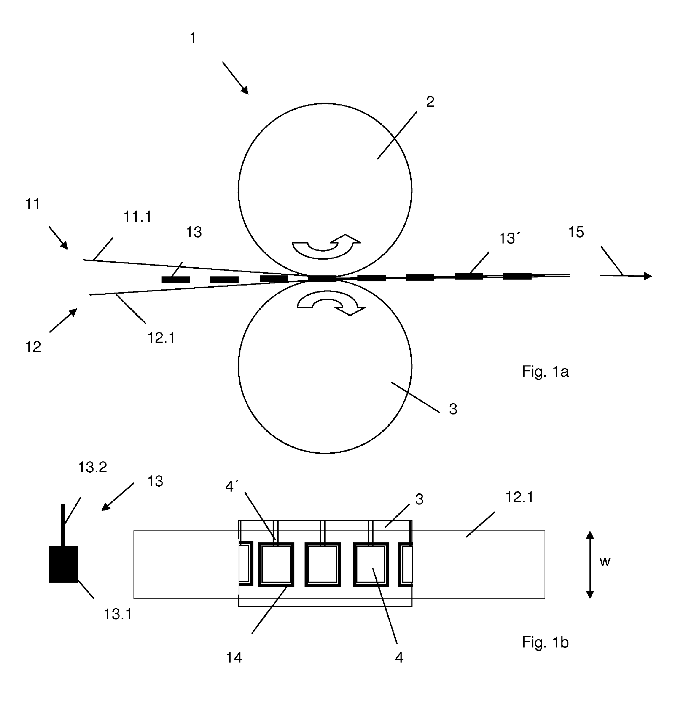

Figures 1 a and 1 b show a sealing unit known from the state of the art. This sealing unit comprises two rotating sealing rolls 2 and 3, whereas one rolle rotates clockwise and the other one counter-clockwise.

A lollipop 13 with a lollipop head 13.1 and a stick 13.2 is sandwiched between two films 11, 12, each provided as a planar web. The films 11, 12 as well as the lollipops 13, to be packaged, move at a constant speed. Between the sealing rolls 2, 3, the two films 11, 12 are pressed together and simultaneously heated by the sealing rolls, so that the two films 11, 12 are sealed together in a sealing area 14 which essentially extends around the head 13.1 of the lollipop. The packaged lollipop 13' are subsequently transported away from the sealing unit and are then separated. As can be particularly seen from figure 1b, each roll comprises a cavity 4 for the lollipop head and a cavity 4' for the stick 13.2 of the lollipop. During the sealing, the cavites 4, 4' take up the lollipop head and the stick of the lollipop, respectively, so that they do not stick out of the sealing plane of the sealing rolls. During this take up, the films 11, 12 are deformed elastically and/or plastically particularly in case the lollipops are not flat, as depicted, but have a more complex, for example spherical, shape. This deformation is so large, that the films tends to crack or wrinkle strongly.

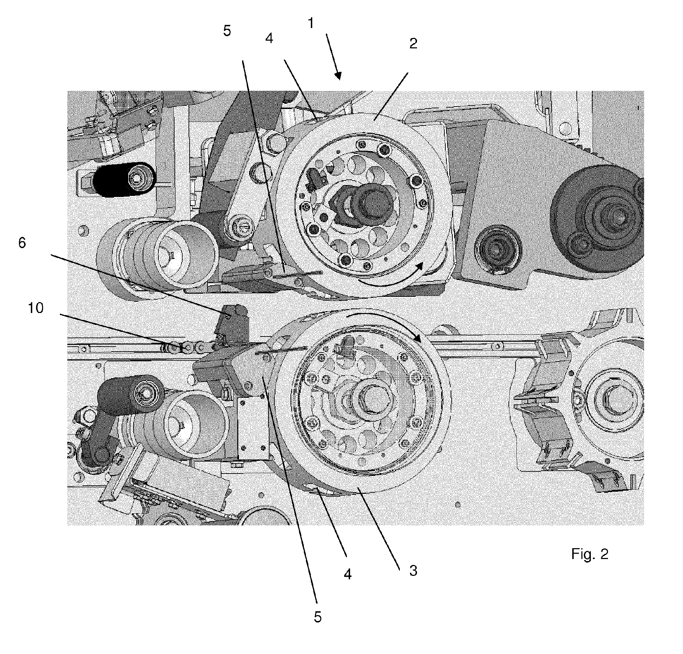

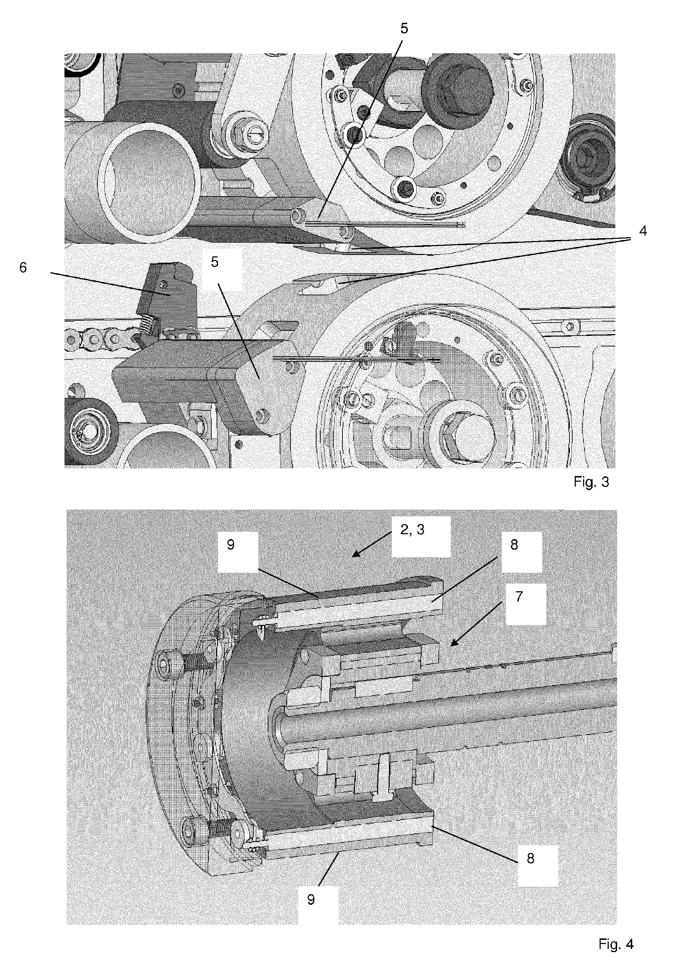

In order to overcome this deficiency, the inventive sealing unit as depicted in figures 2 and 3 comprises one heating mean 5 upstream, relative to the motion of the films, as depicted by arrow 15, of each sealing roll. Each film 11, 12 moves past a heating means 5 and is thus in contact with the heating means 5 and consequently heated immediately upstream of the sealing rolls 2, 3. Due to this heating, the films can deform elastically and/or plastically more easily during the wrapping/sealing process. Thus, they do not crack and the sealed lollipop comprises less wrinkles. As can be also seen in the embodiment according to figures 2 and 3, the sealing unit comprises a chain 10 to which a multitude of grippers 6 are connected. Each gripper holds the stick of a lollipop and transports the lollipop through the sealing unit 1.

The films 11, 12 are for example transported by the sealing rolls 2, 3 and/or separated transportation means. The temperature of each heating means 5 can be adjusted preferably individually. Preferably, each heating means comprises very little heat capacity so that its temperature can be increased or decreased very fast. Particularly, in case the transportation of the films 11, 12 is stopped the temperature has to be lowered very fast in order to assure, that one of the films 11, 12 is not damaged. Preferably, each cavity 4 comprises a bore, which extends from the cavity preferably to the ambient. Through this bore air can be vented. In case the lollipop enters the cavity, air can be discharged via the bore. In case the packed lollipop is removed from the cavity air can be sucked in via the bore.

Figure 4 shows the sealing roll 2, 3 which comprises a heating surface 9 and a bearing 7. By means of the bearing 7, the sealing roll rotates around an axis. According to the present invention, there is an insulation 8, for example a plastic layer, provided between the heating surface and the bearing 7 in order to reduce the heat transferred from the heating surface towards the bearing. This increases the lifetime of the bearing particularly it avoids, that the grease in the bearing becomes too soft and flows out of the bearing. On the heating surface preferably a tool (not depicted) is provided which comprises the cavity and the sealing area 14 for the particular lollipop head to be packaged.

### List of reference signs:

- 1: sealing unit
- 2: sealing roll
- 3: sealing roll
- 4: cavity
- 5: heating means
- 6: gripper
- 7: bearing
- 8: heat insulation
- 9: heating surface
- 10: chain
- 11: first film, top film
- 12: second film, bottom film
- 12.1: surface of the second film
- 13: lollipop
- 13': packaged lollipop
- 13.1: lollipop head
- 13.2: lollipop stick
- 14: seal, sealing area
- 15: transport direction of the films 11, 12
- w: width of the film

## Claims

1. Method for wrapping a lollipop head (13.1) between two films (11, 12), which are connected by a seal (14) which extends essentially around the circumference of the lollipop head (13.1), **characterized in, that** at least one film (11, 12) is heated, prior to sealing.

2. Method according to claim 1, **characterized in, that** the entire surface (11.1, 12.1) of the film (11, 12) is heated.

3. Method according to one of the preceding claims, **characterized in, that** both films (11, 12) are heated.

4. Method according to one of the preceding claims, **characterized in, that** the film (11, 12) is heated to its plasticizing-temperature.

5. Method according to one of the preceding claims, **characterized in, that** the film deforms elastically or plastically during the wrapping and/or sealing.

6. Method according to one of the preceding claims, **characterized in, that** the outer surface of the film is heated.

7. Sealing unit (1) to seal two film (11, 12) at the circumference of a lollipop head (13.1) with two sealing rolls 2, (3), **characterized in, that** it comprises heating means (5) that preheat the surface of at least one, preferably both film(s) (11, 12) upstream, more preferably directly upstream, from the sealing rolls (2, 3).

8. Sealing unit (1) according to claim 7 or the preamble of claim 7, **characterized in, that**, each sealing roll (2, 3) comprises a multitude of cavities (4,4') at its outer circumference, which take up the lollipop head during sealing of the two films, whereas each cavity comprises a ventilation opening.

9. Sealing unit (1) according to claim 7 or 8, that the width of the preheating means (5) is at least equal to the width of the film (11, 12).

10. Sealing unit according to one of the preceding claims or the preamble of claim 7, **characterized in that** each sealing roll (2. 3) comprises a heating surface (9) and a bearing (7) and that a heat insulation (8) is provided between the surface (9) and the bearing (7).
